(19) Europäisches Patentamt
European Patent Office
Office européen des brevets

(11) EP 0 946 622 B1

(12) **EUROPÄISCHE PATENTSCHRIFT**

(45) Veröffentlichungstag und Bekanntmachung des Hinweises auf die Patenterteilung:
**28.02.2001 Patentblatt 2001/09**

(21) Anmeldenummer: **97954420.2**

(22) Anmeldetag: **18.12.1997**

(51) Int Cl.[7]: **C08G 18/78**, C09D 175/04

(86) Internationale Anmeldenummer:
**PCT/EP97/07111**

(87) Internationale Veröffentlichungsnummer:
**WO 98/27135 (25.06.1998 Gazette 1998/25)**

(54) **BESCHICHTUNGSMITTEL UND VERFAHREN ZU DESSEN HERSTELLUNG**

COATING AGENT AND METHOD FOR PRODUCING SAME

AGENT DE REVETEMENT ET SON PROCEDE DE PRODUCTION

(84) Benannte Vertragsstaaten:
**AT BE CH DE ES FR GB IT LI NL SE**

(30) Priorität: **18.12.1996 DE 19652886**
**14.06.1997 DE 19725187**

(43) Veröffentlichungstag der Anmeldung:
**06.10.1999 Patentblatt 1999/40**

(73) Patentinhaber: **BASF Coatings AG**
**48165 Münster (DE)**

(72) Erfinder:
- **BARTOL, Fritz**
**D-59071 Hamm (DE)**
- **BAUMGART, Hubert**
**D-48163 Münster (DE)**
- **RÖCKRATH, Ulrike**
**D-48308 Senden (DE)**

(74) Vertreter: **Fitzner, Uwe, Dr. et al**
**Dres. Fitzner & Münch**
**Rechts- und Patentanwälte**
**Lintorfer Strasse 10**
**40878 Ratingen (DE)**

(56) Entgegenhaltungen:
**EP-A- 0 604 922** **EP-A- 0 624 577**
**DE-C- 19 529 124** **US-A- 4 939 213**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 946 622 B1

Printed by Jouve, 75001 PARIS (FR)

## Beschreibung

Die vorliegende Erfindung betrifft ein Komponentensystem für ein Mehrkomponenten-Beschichtungsmittel enthaltend (1) ein hydroxyfunktionelles Bindemittel oder eine Mischung aus hydroxyfunktionellen Bindemitteln, (2) Tris (alkoxycarbonylamino)Triazin oder eine Mischung aus Tris(alkoxycarbonylamino)Triazinen und (3) freie (Poly-) Isocyanate oder eine Mischung aus freien (Poly-) Isocyanaten. Die Erfindung betrifft weiterhin Verfahren zur Herstellung eines solchen Komponentensystems sowie dessen Verwendung.

Unter Komponentensystem wird ein Gebinde aus verschiedenen, separat hergestellten und gelagerten Lackkomponenten verstanden, die jedoch stets in Verbindung miteinander gehandelt werden und die von einem Anwender, welcher aus einem Beschichtungsmittel einen Überzug fertigen will, vor der Herstellung des Überzuges zu dem Beschichtungsmittel gemischt werden. Solche Komponentensysteme sind u.a. zur Herstellung von Decklacken gebräuchlich. Unter dem Begriff Decklacke werden hierbei Lacke verstanden, die zur Herstellung der obersten Lackschicht verwendet werden. Die oberste Lackschicht kann dabei einschichtig oder mehrschichtig, insbesondere zweischichtig, sein. Zweischichtige Decklackierungen bestehen aus einer pigmentierten Basislackschicht und einer auf der Basislackschicht aufgebrachten unpigmentierten oder nur mit transparenten Pigmenten pigmentierten Klarlackschicht. Zweischichtlackierungen werden heute nach dem Naß-in-Naß-Verfahren hergestellt, bei dem ein pigmentierter Basislack vorlackiert wird und die so erhaltene Basislackschicht ohne Einbrennschritt mit einem Klarlack überlackiert und anschließend die Basislackschicht und Klarlackschicht zusammen gehärtet werden. Dieses Verfahren ist ökonomisch sehr vorteilhaft, stellt aber hohe Anforderungen an den Basislack und den Klarlack. Der auf den noch nicht gehärteten Basislack applizierte Klarlack darf die Basislackschicht nicht anlösen oder sonst wie stören, weil sonst Lackierungen mit schlechtem Aussehen erhalten werden. Dies gilt insbesondere für Lackierungen, bei denen Basislacke, die Effektpigmente (z.B. Metallpigmente, insbesondere Aluminiumflakes, oder Perlglanzpigmente) enthalten, eingesetzt werden.

Komponentensysteme für Klarlacke, die vorwiegend für die Lackierung von Automobilen Verwendung finden, bestehen üblicherweise aus hydroxyfunktionellen Polyacrylaten mit freien Isocyanat-Trimeren des Hexamethylendiisocyanats. Die daraus erhaltenen Klarlacke weisen im applikationsfähigen Zustand einen Festkörpergehalt von 40 bis 55 Gew.-% auf. Ihre Vorteile liegen in einer niedrigen Härtungstemperatur von 20 bis 40 Grad C und einer hohen Chemikalienbeständigkeit. Diese Klarlacksysteme habe derzeit gegenüber melaminharzvernetzten Einkomponenten-Klarlacken jedoch verschiedene gravierende Nachteile:

1. Eine zu geringe Kratzbeständigkeit, besonders gegenüber leichten oberflächlichen Beschädigungen.
2. Eine schlechte Steinschlagbeständigkeit (Haftung) nach Schwitzwasserbelastung, vor allem nach einer Reparatur-Lackierung.
3. Ein starkes Wiederanlösen auf konventionellen Basislacken, das sich durch verringerten Flop bei Metallic-Basislacken bzw. Farbtonveränderungen in Basislack bemerkbar macht, insbesondere wenn versucht wird, den Feststoffgehalt durch Anteile von Acrylatharzen mit niedrigem Molekulargewicht zu erhöhen.

Einkomponenten-Klarlacke zeigen diese Probleme nicht oder nur in verringertem Maß, können aber aufgrund ihrer erheblich schlechteren Chemikalienbeständigkeit nicht anstelle von Zweikomponenten-Klarlacken verwendet werden.

Der vorliegenden Erfindung liegt somit die Aufgabe zugrunde, ein Beschichtungsmittel zur Verfügung zu stellen, das die oben genannten Nachteile üblicher Zweikomponentenklarlacksysteme nicht aufweist, jedoch eine vergleichbare Chemikalienfestigkeit und Bewitterungsfestigkeit wie übliche Zweikomponentenklarlacksysteme hat.

Diese Aufgabe wird erfindungsgemäß durch ein Komponentensystem gelöst, welches dadurch gekennzeichnet ist, daß eine erste Komponente (I) aus dem hydroxyfunktionellen Bindemittel oder der Mischung aus hydroxyfunktionellen Bindemitteln (1) gebildet ist, daß eine zweite Komponente (II) aus den freien (Poly-) Isocyanaten oder der Mischung aus freien (Poly-) Isocyanaten (3) gebildet ist, und daß eine dritte Komponente (III) aus dem Tris(alkoxycarbonylamino)Triazin oder der Mischung aus Tris(alkoxycarbonylamino)Triazinen (2) gebildet ist.

Überraschenderweise werden erfindungsgemäß durch den Einsatz einer Vernetzer-Kombination aus Tris(alkoxycarbonylamino)Triazin und freien Isocyanaten erhebliche Vorteile gegenüber herkömmlichen Zweikomponentenklarlacken erzielt. Dazu zählen insbesondere:

- Verringertes Anlösen konventioneller Basislacke, das insbesondere an einem verbesserten Metalleffekt bei Metallic-Basislacken erkennbar ist,
- Verbesserte Haftung bei Steinschlagprüfungen,
- Verbesserte Kratzfestigkeit bei gleichzeitig hoher

Säurebeständigkeit.

Aus der Literaturstelle DE 195 29 124 C1 ist grundsätzlich ein Beschichtungsmittel bekannt, welches auch Tris(alkoxycarbonylamino)Triazin als Vernetzer verwendet. Die in dieser Literaturstelle beschriebenen Beschichtungsmittel sind allerdings ausnahmslos Einkomponenten-Beschichtungsmittel. Zwar ist ein pauschaler Hinweis auf die Existenz von Mehrkomponentensystemen gegeben, es sind jedoch keinerlei Angaben oder auch nur Andeutungen gemacht, wie verschiedene Komponenten zusammengesetzt sein könnten.

Für das hydroxyfunktionelle Bindemittel oder für die Mischung aus hydroxyfunktionellen Bindemitteln kommen vorzugsweise solche aus der Gruppe "Bindemittel auf Basis von hydroxyfunktionellen Polyacrylaten, hydroxyfunktionellen Polyestern und/oder hydroxyfunktionellen Polyurethanen" und/oder Mischungen aus Elementen dieser Gruppe und/oder Mischungen verschiedener Bindemittel eines Elements dieser Gruppe in Betracht.

Erfindungsgemäß werden vorzugsweise Polyacrylatharze eingesetzt, die Hydroxylzahlen von 40 bis 240, vorzugsweise 60 bis 210, ganz besonders bevorzugt 100 bis 200, Säurezahlen von 0 bis 35, bevorzugt 0 bis 23, ganz besonders bevorzugt 3,9 bis 15,5, Glasübergangstemperaturen von -35 bis +70 °C, bevorzugt -20 bis +40 °C, ganz besonders bevorzugt -10 bis +15 °C und zahlenmittlere Molekulargewichte von 1500 bis 30000, bevorzugt 2000 bis 15000, ganz besonders bevorzugt 2500 bis 5000 aufweisen.

Die Glasübergangstemperatur der Polyacrylatharze wird durch Art und Menge der eingesetzten Monomere bestimmt. Die Auswahl der Monomeren kann vom Fachmann unter Zuhilfenahme der folgenden Formel, mit der die Glasübergangstemperaturen von Polyacrylatharzen näherungsweise berechnet werden können, vorgenommen werden:

$$\frac{1}{T_g} = \sum_n \frac{W_n}{T_{gn}} \quad ; \quad \sum_n W_n = 1$$

TG = Glasübergangstemperatur des Polyacrylatharzes
$W_n$ = Gewichtsanteil des n-ten Monomers
$Tg_n$ = Glasübergangstemperatur des Homopolymers aus dem n-ten Monomer

Maßnahmen zur Steuerung des Molekulargewichtes (z.B. Auswahl entsprechender Polymerisationsinitiatoren, Einsatz von Kettenübertragungsmitteln) gehören zum Fachwissen des Durchschnittsfachmanns und müssen hier nicht näher erläutert werden.

Als hydroxyfunktionelle Bindemittelkomponente werden beispielsweise auch Polyesterharze bzw. Alkydharze eingesetzt, die herstellbar sind, indem (a1) eine cycloaliphatische oder aliphatische Polycarbonsäure oder eine Mischung aus solchen Polycarbonsäuren (b1)ein aliphatisches oder cycloaliphatisches Polyol mit mehr als zwei Hydroxylgruppen im Molekül oder eine Mischung aus solchen Polyolen (c1) ein aliphatisches oder cycloaliphatisches Diol oder eine Mischung aus solchen Diolen und (d1) eine aliphatische lineare oder verzweigte gesättigte Monocarbonsäure oder eine Mischung aus solchen Monocarbonsäuren in einem molaren Verhältnis von (a1) : (b1) : (c1) : (d1) = 1,0 : 0,2 - 1,3 : 0,0 - 1,1 : 0,0 - 1,4, vorzugsweise 1,0 : 0,5 - 1,2 : 0,0 - 0,6 : 0,2 - 0,9 zu einem Polyesterharz bzw. Alkydharz umgesetzt werden. Als Beispiele für den Bestandteil (a1) werden genannt: Hexahydrophtalsäure, 1,4-Cyclohexandicarbonsäure, Endomethylentetrahydrophtalsäure, Oxalsäure, Malonsäure, Bernsteinsäure, Glutarsäure, Adipinsäure, Pimelinsäure, Korksäure, Azelainsäure und Sebacinsäure. Als Beispiele für den Bestandteil (b1) werden genannt: Pentaerythrit, Trimethylolpropan, Trimethylolethan und Glycerin. Als Beispiele für den Bestandteil (c1) werden genannt: Ethylenglykol, Diethylenglykol, Propylenglykol, Neopentylglykol, 2-Methyl-2-propylpropandiol-1,3,2-Ethyl-2-butylpropandiol-1,3, 2,2,4-Trimethyl- pentandiol-1,5, 2,2,5-Trimethylhexandiol-1,6, Hydroxypivalinsäureneopentylglykolester und Dimethylolcyclohexan. Als Beispiele für den Bestandteil (d1) werden genannt: 2-Ethylhexansäure, Laurinsäure, Isooctansäure, Isononansäure und Monocarbonsäuremischungen, die aus Kokosfett oder Palmkernfett gewonnen werden.

Die Herstellung von Hydroxylgruppen tragenden Polyester- und/oder Alkydharzen ist z.B. in Ullmanns Encyklopädie der technischen Chemie, dritte Auflage, 14. Band, Urban & Schwarzenberg, München, Berlin 1863, Seiten 80 bis 89 und Seiten 99 bis 105, in den Büchern: Resines Alkydes-Polyesters von J. Bourry, Paris Verlag Dunod 1952, Alkyd Resins von C.R. Martens, Reinhold Publishing Corporation, New York 1961 und Alkyd Resin Technology von T. C. Patton, Interscience Publishers 1962 beschrieben.

Als hydroxyfunktionelle Bindemittelkomponente werden beispielsweise auch Polyacrylatharze eingesetzt, die herstellbar sind, indem (a2) 10 bis 92, vorzugsweise 20 bis 60 Gew. -% eines Alkyl- oder Cycloalkylacrylates oder eines Alkyl- oder Cycloalkylmethacrylates mit 1 bis 18, vorzugsweise 4 bis 13 Kohlenstoffatomen im Alkyl- bzw. Cycloalkylrest oder Mischungen aus solchen Monomeren, (b2) 8 bis 60, vorzugsweise 12,5 bis 38,5 Gew.-% eines Hydroxyalkylacrylates oder eines Hydroxylalkylmethacrylates mit 2 bis 4 Kohlenstoffatomen im Hydroxyalkylrest oder Mischungen aus solchen Monomeren, (c2)0,0 bis 5,0, vorzugsweise 0,7 bis 3,0 Gew.-% Acrylsäure oder Methacrylsäure oder Mischungen aus diesen Monomeren und (d2) 0 bis 50, vorzugsweise 0 bis 30 Gew.-% von (a2), (b2) und (c2) verschiedene, mit (a2), (b2) und (c2) copolymerisierbare ethylenisch ungesättigte Monomere oder Mischungen aus solchen Monomeren zu Polyacrylatharzen mit Hydroxylzahlen von 40 bis 240, vorzugsweise 60 bis 150, Säurezahlen von 0 bis 35, vorzugsweise von 5 bis 20, Glasübergangstemperaturen von -35 bis +70 Grad C, bevorzugt von -20 bis +40 Grad C und zahlenmittleren Molekulargewichten von 1500 bis 30000, vorzugsweise von 2000 bis 15000, (gelpermeationschromatographisch mit Polystyrolstandard bestimmt) polymerisiert werden. Als Beispiele für (a2)-Komponenten werden genannt: Methyl-, Ethyl-, Propyl-, n-Butyl-, Isobutyl-, tert.-Butyl-, Pentyl-, Hexyl, Heptyl- und 2-Ethyl-hexylacrylat bzw. -methacrylat sowie Cyclohexylacrylat und Cyclohexylmethacrylat. Als Beispiele für (b2)-Komponenten werden genannt: Hydroxyethyl-, Hydroxypropyl- und Hydroxybutylacrylat bzw. -methacrylat. Als Beispiele für (d2)-Komponenten werden genannt: Vinylaromaten, wie beispielsweise Styrol, Vinyltoluol, alpha-Methylstyrol, alpha-Ethylstyrol, kernsubstituierte Diethylstyrole, Isopropylstyrol, Butylstyrole und Methoxystyrole; Vinylether, wie beispielsweise Ethylvinylether, n-Propylvinylether, Isopropylvinylether, n-Butylvinylether und Isobutylvinylether und Vinylester, wie beispielsweise Vinylacetat, Vinylpropionat, Vinylbutyrat, Vinylpivalat und der Vinylester der 2-Methyl-2-ethylheptansäure. Die Hydroxylzahl und die Säurezahl der Polyacrylatharze kann der Fachmann problemlos durch die Menge an eingesetzter Komponente (b2) bzw. (c2) steuern.

Als Polyacrylatkomponenten sind ferner die in der europäischen Patentanmeldung EP 0 767 185 sowie den US-Patenten 5 480 943, 5 475 073 und 5 534 598 genannten hydroxyfunktionellen Verbindungen geeignet.

Als hydroxyfunktionelle Bindemittelkomponente werden beispielsweise auch Polyacrylatharze eingesetzt, die erhältlich sind, indem (A1) 10 bis 51 Gew.-%, vorzugsweise 25 bis 41 Gew,-%, 4-Hydroxy-n-butylacrylat oder 4-Hydroxy-n-butylmethacrylat oder eine Mischung aus 4-Hydroxy-n-butylacrylat und 4-Hydroxy-n-butylmethacrylat, vorzugsweise 4-Hydroxy-n-butylacrylat, (A2) 0 bis 36 Gew.-%, vorzugsweise 0,1 bis 20 Gew.-%, eines von (A1) verschiedenen hydroxylgruppenhaltigen Esters der Acrylsäure oder eines hydroxylgruppenhaltigen Esters der Methacrylsäure oder eines Gemisches aus solchen Monomeren, (A3) 28 bis 85 Gew.-%, vorzugsweise 40 bis 70 Gew.-% eines von (A1) und (A2) verschiedenen aliphatischen oder cycloaliphatischen Esters der Methacrylsäure mit mindestens 4 C-Atomen im Alkoholrest oder eines Gemisches aus solchen Monomeren, (A4) 0 bis 3 Gew.-%, vorzugsweise 0,1 bis 2 Gew.-%, einer ethylenisch ungesättigten Carbonsäure oder einer Mischung aus ethylenisch ungesättigten Carbonsäuren und (A5) 0 bis 20 Gew.-%, vorzugsweise 5 bis 15 Gew.-% eines von (A1), (A2), (A3) und (A4) verschiedenen ungesättigten Monomeren oder eines Gemisches aus solchen Monomeren zu einem Polyacrylatharz mit einer Hydroxylzahl von 60 bis 200, vorzugsweise von 100 bis 160, einer Säurezahl von 0 bis 35, vorzugsweise von 0 bis 25, und einem zahlenmittleren Molekulargewicht von 1500 bis 10000, vorzugsweise 2500 bis 5000, polymerisiert werden, wobei die Summe der Gewichtsteile der Komponenten (A1) bis (A5) stets 100% ergibt und die Zusammensetzung der Komponente (A3) so gewählt wird, daß bei alleiniger Polymerisation der Komponente (A3) ein Polymethacrylatharz mit einer einer Glasübergangstemperatur von +10 bis +100 Grad C, vorzugsweise von +20 bis +60 Grad C, erhalten wird. Als Beispiele für die Komponente (A2) werden genannt: Hydroxyalkylester der Acrylsäure, wie z.B. Hydroxyethylacrylat und Hydroxypropylacrylat und Hydroxyalkylester der Methacrylsäure, wie z.B. Hydroxyethylmethacrylat und Hydroxypropylmethacrylat, wobei die Wahl so zu treffen ist, daß bei alleiniger Polymerisation der Komponente (A2) ein Polyacrylatharz mit einer Glasübergangstemperatur von 0 bis +80 Grad C, vorzugsweise von +20 bis +60 Grad C erhalten wird. Als Beispiele für die Komponente (A3) werden genannt: aliphatische Ester der Methacrysäure mit 4 bis 20 C-Atomen im Alkoholrest, wie z.B. n-Butyl-, iso-Butyl-, tert.-Butyl-, 2-Ethylhexyl-, Stearyl- und Laurylmethacrylat, und cycloaliphatische Ester der Methacrylsäure wie, z.B. Cyclohexylmethacrylat. Als Komponente (A4) werden vorzugsweise Acrylsäure und/oder Methacrylsäure eingesetzt. Als Beispiele für die Komponente (A5) werden genannt: vinylaromatische Kohlenwasserstoffe, z.B. Styrol, a-Alkylstyrol und Vinyltuluol, Amide der Acrylsäure und Methacrylsäure, z.B. Methacrylamid und Acrylamid, Nitrile der Acrylsäure und Methacrylsäure, Vinylether und Vinylester. Als Komponente (A5) werden vorzugsweise vinylaromatische Kohlenwasserstoffe, insbesondere Styrol, eingesetzt. Die Zusammensetzung der Komponente (A5) ist vorzugsweise so zu treffen ist, daß bei alleiniger Polymerisation der Komponente (A5) ein Polymer mit einer Glasübergangstemperatur von +70 bis +120 Grad C, vorzugsweise von +80 bis +100 Grad C erhalten wird. Die Herstellung dieser Polyacrylatharze kann nach allgemein gut bekannten Polymerisationsverfahren (siehe z.B. Houben-Weyl, Methoden der organischen Chemie, 4. Auflage, Band 14/1, Seite 24 bis 255 (1961)) erfolgen. Sie werden vorzugsweise mit Hilfe der Lösungsmittelpolymerisation hergestellt. Hierbei wird üblicherweise ein organisches Lösungsmittel bzw. Lösungsmittelgemisch vorgelegt und zum Sieden erhitzt. In dieses organische Lösungsmittel bzw. Lösungsmittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 160 Grad C, vorzugsweise zwischen 130 und 150 Grad C. Als Polymerisationsinitiatoren werden vorzugsweise freie Radikale bildende Initiatoren eingesetzt. Initiatorenart und -menge werden üblicherweise so gewählt, daß bei der Polymerisationstemperatur während der Zulaufphase ein möglichst konstantes Radikalangebot vorliegt.

Als Beispiele für einsetzbare Initiatoren werden genannt: Dialkylperoxide, z.B. Di-tert.-Butylperoxid und Dicumylperoxid, Hydroperoxide, z.B. Cumolhydroperoxid und tert.-Butylhydroperoxid, Perester, z.B. tert.-Butylperbenzoat, tert.-Butylperpivalat, tert.-Butylper-3,5,5-trimethylhexanoat und tert.-Butylper-2-ethylhexanoat. Die Polymerisationsbedingungen (Reaktionstemperatur, Zulaufzeit der Monomerenmischung, Menge und Art der organischen Lösungsmittel und Polymerisationsinitiatoren, evt. Mitverwendung von Molekulargewichtsreglern, z.B. Mercaptane, Thioglykolsäureester und Chlorwasserstoffe) werden so ausgewählt, daß die Polyacrylatharze ein zahlenmittleres Molekulargewicht wie angegeben (bestimmt durch Gelpermeationschromatographie unter Verwendung von Polystyrol als Eichsubstanz) aufweisen. Die Säurezahl kann vom Fachmann durch Einsatz entsprechender Mengen der Komponente (A4) eingestellt werden. Analoges gilt für die Einstellung der Hydroxylzahl. Sie ist über die Menge an eingesetzter Komponente (A1) und (A2) steuerbar.

Erfindungsgemäß kommen auch Bindemittel auf der Basis von Polyurethan in Betracht.

Erfindungswesentlich ist schließlich, daß das Beschichtungsmittel die Bestandteile (2) und (3) enthält, welche beide Vernetzungsmittel sind.

Als Bestandteil (2) werden Tris(Alkoxycarbonylamino)Triazine der Formel

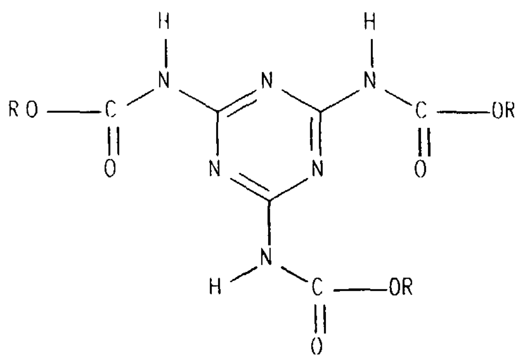

eingesetzt, wobei R=Methyl, Butyl-.....Gruppen bedeuten. Ebenso können Derivate der genannten Verbindungen zum Einsatz kommen. Bevorzugt werden für den Bestandteil (2) Tris(Alkoxycarbonylamino)Triazine eingesetzt, wie sie in der US-PS 5084541 beschrieben sind.

Der Bestandteil (3) enthält als Vernetzungsmittel mindestens ein gegebenfalls in einem oder mehreren organischen, gegebenenfalls wasserverdünnbaren Lösemitteln gelöstes oder dispergiertes, nichtblockiertes Di- und/oder Polyisocyanat. Zusätzlich kann aber auch blockiertes Isocyanat oder eine Mischung aus blockierten Polyisocyanatenenthalten sein.

Bei dem zwingend eingesetzten freien Polyisocyanatbestandteil handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 2000 mPa.s (bei 23 Grad C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Butylacetat und ähnliches. Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind die bei der Beschreibung der Polyurethanharze (A2) genannten Isocyanate und/oder isocyanatgruppenhaltigen Polyurethanpräpolymere, die durch Reaktion von Polyolen mit einem Überschuß an Polyisocyanaten hergestellt werden können und die bevorzugt niederviskos sind. Es können auch Isocyanuratgruppen und/oder Biuretgruppen und/oder Allophanatgruppen und/oder Urethangruppen und/oder Harnstoffgruppen und/oder Uretdiongruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-düsocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Wenn blockiertes Isocyanat zugemischt ist, so ist es vorzugsweise so ausgebildet, daß es sowohl mit einem Blockierungsmittel (Z1) als auch mit einem Blockierungsmittel (Z2) blockierte Isocyanatgruppen enthält, wobei das Blockierungsmittel (Z1) ein Dialkylmalonat oder eine Mischung aus Dialkylmalonaten ist, das Blockierungsmittel (Z2) ein von (Z1) verschiedenes, aktive Methylengruppen enthaltendes Blockierungsmittel, ein Oxim oder eine Mischung aus diesen Blockierungsmitteln ist und das Äquivalentverhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt. Das blockierte Isocyanat wird vorzugsweise wie folgt hergestellt. Ein Polyisocyanat oder eine Mischung aus Polyisocyanaten wird in an sich bekannter Art und Weise mit einer Mischung aus den Blockierungsmitteln (Z1) und (Z2) umgesetzt, wobei die Mischung aus den Blockierungsmitteln (Z1) und (Z2) die Blockierunqsmittel (Z1) und (Z2) in einem Molverhältnis enthält, das zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt. Das Polyisocyanat bzw. die Mischung aus Polyisocyanaten kann mit der Mischung aus den Blockierungsmitteln (Z1) und (Z2) so weit umgesetzt werden, bis keine Isocyanatgruppen mehr nachweisbar sind. In der Praxis kann das den Einsatz von sehr großen Überschüssen an Blockierungsmitteln und/oder sehr lange Reaktionszeiten erfordern. Es gefunden, daß auch dann Lacke mit guten Eigenschaften erhalten werden, wenn mindestens 50, vorzugsweise mindestens 70 Prozent der Isocyanatgruppen des Polyisocyanates bzw. des Gemisches aus Polyisocyanaten mit der Mischung aus den Blockierungsmitteln (Z1) und (Z2) umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1, 3,2,2,4-Trimethylpentandiol-1,5 und 2,2,5-Trimethylhexandiol-1,6 oder das als Bestandteil (1) einsetzbare hydroxylgruppenhaltige Bindemittel eingesetzt. Ein geeignetes blockiertes Polyisocyanat ist auch erhältlich, indem mit dem Blockierungsmittel (Z1) bzw. (Z2) blockierte Polyisocyanate in einem solchen Verhältnis gemischt werden, daß eine Mischung erhalten wird, in der das Äquivalent-Verhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besondere bevorzugt zwischen 7,5 : 2,5 und 6,5 : 3,5 liegt. Prinzipiell können alle auf dem Lackgebiet einsetzbaren Polyisocyanate zur Herstellung des blockierten Polyisocyanats eingesetzt werden. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat, Trimethylhexamethylendiisocyanat, Dicyclohexylmethan- diisocyanat und 1,3-Bis-(2-isocyanatopropyl-2-)benzol (TMXDI) sowie Addukte dieser Polyisocyanate an Polyole, insbesondere niedermolekulare Polyole, wie z.B. Trimethylolpropan und von diesen Polyisocyanaten abgeleitete isocyanuratgruppen-und/oder biuretgruppenhaltige Polyisocyanate. Als Polyisocyanate werden besonders bevorzugt Hexamethylendiisocyanat und Isophorondiisocyanat, von diesen Diisocyanaten abgeleitete isocyanurat- oder biuretgruppenhaltige Polyisocyanate, die vorzugsweise mehr als zwei Isocyanatgruppen im Molekül enthalten sowie Umsetzungsprodukte aus Hexamethylendiisocyanat und Isophorondiisocyanat oder einer Mischung aus Hexamethylendiisocyanat und Isophorondiisocyanat mit 0,3 - 0,5 Aquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt. Als Blocklerungsmittel (Z1) werden Dialkylmalonate oder eine Mischung aus Dialkylmalonaten eingesetzt. Als Beispiele für einsetzbare Dialkylmalonate werden Dialkylmalonate mit je 1 bis 6 Kohlenstoffatomen in den Alkylresten genannt, wie z.B. Malonsäuredimethylester und Malonsäurediethylestar, wobei Malonsäurediethylester bevorzugt eingesetzt wird. Als Blokkierungsmittel (Z2) werden von (Z1) verschiedene, aktive Methylengruppen enthaltende Blockierungsmittel und Oxime sowie Mischungen aus diesen Blockierungsmitteln eingesetzt. Als Beispiele für Blockierungsmittel, die als Blockierungsmittel (Z2) einsetzbar sind, werden genannt: Acetessigsäuremethyl-, ethyl-, -propyl-, butyl-, -pentyl-, hexyl -, heptyl-, octyl-, nonyl-, -decyl- oder-dodecylester, Acetonoxim, Methylethylketoxim, Acetylaceton, Formaldoxim, Acetaldoxim, Benzophenoxim, Acetoxim und Diisobutylketoxim. Als Blockierungsmittel (Z2) wird vorzugsweise ein Acetessigsäurealkylester mit 1 bis 6 Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäureethylester oder Methylethylketoxim als Blockierungsmittel (Z2) eingesetzt.

Eine bevorzugte Ausführungsform der Erfindung ist dadurch gekennzeichnet, daß die Mengen der Bestandteile (1) bis (3) in den Verhältnissen zueinander so gewählt sind, daß das Verhältnis OH: (NCO + NH-CO-OR) 1,0:0,5 bis 1,0:2,0, vorzugsweise 1,0:0,8 bis 1,0:1,5, beträgt. Die Polyisocyanatkomponente wird in den erfindungsgemäßen Beschichtungsmitteln z.B. im einzelnen vorteilhafterweise in einer solchen Menge eingesetzt, daß das Verhältnis der Hydroxylgruppen des Bindemittels (1) zu den Isocyanatgruppen der Vernetzer (2) und (3) zwischen 1 : 2 und 2 : 1, besonders bevorzugt zwischen 1 : 1,5 und 1, 5 : 1 liegt.

Das Mengenverhältnis der Bestandteile (2) und (3) zueinander ist vorteilhafterweise so ausgewählt, daß die

Menge an Tris(alkoxycarbonylamino)Triazin oder an Mischung aus Tris(alkoxycarbonylamino)Triazinen 1 bis 99 Gew. %, vorzugsweise 5 bis 90 Gew.%, beträgt, bezogen auf die Gesamtmenge an Tris(alkoxycarbonylamino)Triazin bzw. Mischung aus Tris(alkoxycarbonylamino)Triazinen plus freie Isocyanate bzw. der Mischung aus freien Polyisocyanate. Sind blockierte Isocyanate beigemischt, so gilt entsprechendes, nur dann jeweils bezogen auf die entsprechende Gesamtmenge an Isocyanaten anstatt lediglich freier Polyisocyanate.

Die vorstehend genannten Mengenverhältnisse beziehen sich dabei auf die Mengenverhältnisse, die sich bei vorgeschriebener Mischung der Komponenten (I) bis (III) in dem applizierbaren oder applizierten Lack einstellen. Mehrkomponentensystemen werden nämlich regelmäßig in Gebinden vertrieben, die jeweils insgesamt oder in jeweiligen Teilmengen vermischt den Lack mit den gewünschten Mengenverhältnissen der Bestandteile ergeben, so daß kein Teilmenge einer der Komponenten übrig bleibt, wenn die andere Komponente oder die anderen Komponenten aufgebraucht sind. Mit anderen Worten ausgedrückt, werden durch die vorstehenden Mengenverhältnisse die Mengen der Bestandteile (1) bis (3) in den Komponenten I bis III eines Mehrkomponenten-Gebindes definiert.

Im einzelnen kann das Komponentensystem UV-Absorber, vorzugsweise Triazinverbindungen, und Radikalfänger in zumindest einer der Komponenten (I) und/oder (II) und/oder (III) enthalten. Das Komponentensystem kann ferner Katalysatoren für die Vernetzung enthalten. Hierfür kommen insbesondere metallorganische Verbindungen, vorzugsweise Zinn und/oder wismutorganische Verbindungen in Betracht. Ebenso können tertiäre Amine in Frage kommen. Das Komponentensystem kann ferner Rheologiemittel sowie sonstige Lackhilfsstoffe in zumindest einer der Komponenten (I) und/oder (II) und/oder (III) enthalten. Selbstverständlich können auch Pigmente jeglicher Art, beispielsweise Farbpigmente wie Azopigmente, Phtalocyaninpigmente, Carbonylpigmente, Dioxazinpigmente, Titandioxid, Farbruß, Eisenoxide und Chrom- bzw. Kobaltoxide, oder Effektpigmente wie Metallplättchenpigmente, insbesondere Aluminiumplättchenpigmente und Perlglanzpigmente, in zumindest einer der Komponenten (I) und/oder (II) und/oder (III) eingebaut sein. Vorzugsweise sind aber keine oder transparente Pigmente vorgesehen.

Die Herstellung der Komponenten (I) bis (III) erfolgt nach den üblichen Methoden aus den einzelnen Bestandteilen unter Rühren. Die Herstellung des Beschichtungsmittels aus den Komponenten (I) bis (III) erfolgt ebenfalls mittels Rühren bzw. Dispersion unter Verwendung der üblicherweise eingesetzten Vorrichtungen, beispielsweise mittels Dissolver o.ä. oder mittels ebenfalls üblicherweise eingesetzter Mehrkomponenten-Dosier und Mischanlagen oder mittels des in der DE-A-195 10 651, Seite 2, Zeile 62, bis Seite 4, Zeile 5, beschriebenen Verfahrens zur Herstellung wäßriger Mehrkomponenten-Polyurethanlacke.

Die Komponenten, insbesondere die Komponente (I), können als nichtwäßrige (i.e. mit organischen Lösungsmitteln) oder als wäßrige Komponenten formuliert sein. Im Falle einer nichtwäßrigen Formulierung können die in der Lackherstellung üblichen organischen Lösungsmittel Verwendung finden. Mittels wäßriger Komponenten werden wäßrige Beschichtungsmittel nach Mischung der Komponenten (I) bis (III) erhalten. Ist ein wäßriges Beschichtungsmittel gewünscht, so können die Komponenten (I) und/oder (II) und/oder (III) aber auch weitgehend wasserfrei und weitgehend frei von organischen Lösungsmitteln, jedoch als in Wasser dispergierbar formuliert sein. Dann wird das wäßrige Beschichtungsmittel durch Mischung der Komponenten und Zugabe von Wasser erhalten. Eine in Wasser dispergierbare bzw. lösbare Komponente (I) ist auf übliche Weise formulierbar, indem beispielsweise saure Gruppen in das Bindemittel eingebracht werden, welche dann mit einer üblichen Base, beispielsweise Ammoniak oder einem organischen Amin wie Triethylamin neutralisiert werden. Die Lösung bzw. Dispersion einer in Wasser dispergierbaren Komponente (I) und/oder (II) und/oder (III) in Wasser erfolgt auf übliche Weise z.B. durch starkes Rühren ggf. unter leichter Erwärmung. Alternativ kann eine Lösung bzw. Dispersion in Wasser mittels nicht-ionischer Emulgatoren erfolgen. Insofern wird ebenfalls auf Standardverfahren der Herstellung wäßriger Lacke verwiesen.

Die Erfindung betrifft auch Verfahren zur Herstellung eines erfindungsgemäßen Komponentensystems. Dieses Verfahren ist dadurch gekennzeichnet, daß die Komponente (I) aus dem hydroxyfunktionellem Bindemittel oder der Mischung aus hydroxyfunktionellen Bindemitteln hergestellt wird, die Komponente (II) aus dem freiem Polyisocyanat oder der Mischung aus freien Polyisocyanaten hergestellt wird, und die Komponente (III) aus dem Tris(alkoxycarbonylamino)Triazin oder der Mischung aus Tris(alkoxycarbonylamino)Triazinen hergestellt wird, wobei zumindest einer der Komponenten (I) bis (III) lackübliche Zusatzstoffe zugegeben und mit dieser homogen verrührt werden. Eine Weiterbildung dieses Verfahrens ist dadurch gekennzeichnet, daß als lackübliche Zusatzstoffe Lösemittel, UV-Absorber, Radikalfänger, Verlaufsmittel und/oder Rheologiemittel zugegeben werden. Vorteilhafterweise werden die lacküblichen Zusatzstoffe der Komponente (I) zugegeben. Weiterhin vorteilhaft ist es, wenn die Mengen der Bestandteile (1) bis (3) so gewählt werden, daß das Verhältnis OH: (NCO + NH-CO-OR) 1, 0:0, 5 bis 1, 0:2, 0, vorzugsweise 1, 0:0, 8 bis 1, 0:1, 5 beträgt.

Schließlich betrifft die Erfindung auch noch die Verwendungen gemäß den Patentanspüchen 12 bis 14.

Das erfindungsgemäße Komponentensystem wird zur Herstellung von Ein- oder Mehrschichtlackierungen und bevorzugt zur Herstellung von Decklacken auf metallischen Substraten eingesetzt. Es kann aber auch zur Herstellung eines über einer Basislackschicht zu applizierenden Klarlacks, beispielsweise eines Klarlacks einer nach dem naß-in-naß-Verfahren hergestellten Mehrschichtlackierung bestimmt sein. Selbstverständlich können die Substrate auch direkt mit dem Klarlack oder dem Decklack beschichtet werden.

Schließlich können die Beschichtungsmittel auch auf andere Substrate, wie beispielsweise Kunststoff, Holz oder Papier, appliziert werden. Die Applikation erfolgt mit Hilfe üblicher Methoden, beispielsweise Spritzen, Rakeln, Tauchen oder Streichen.

Aufgrund der genannten erfindungsgemäßen Verwendungen des Komponentensystems fallen auch damit hergestellte Bindemittel bzw. Lacke, sowie mit diesen Bindemitteln bzw. Lacken beschichtete Gegenstände unter die Erfindung.

Die erfindungsgemäßen Beschichtungsmittel werden vorzugsweise bei 80 bis 170 °C gehärtet. Besonders bevorzugt bei Temperaturen zwischen 100 und 150 °C. In speziellen Anwendungsformen der erfindungsgemäßen Beschichtungsmittel können auch tiefere Härtungstemperaturen angewendet werden.

Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden bevorzugt aber im Bereich der Serienlackierung eingesetzt.

Die Erfindung wird im folgenden unter Bezugnahme auf die Beispiele näher beschrieben:

## 1. Herstellung von Bindemittellösungen

### 1.1. Acrylatharz A

In einem Labor-Reaktor mit einem Nutzvolumen von 4 l ausgestattet mit einem Rührer, zwei Tropftrichtern für die Monomermischung resp. Initiatorlösurig, Stickstoff-Einleitungsrohr, Thermometer und Rückflußkühler werden 899 g einer Fraktion aromatischer Kohlenwasserstoffe mit einem Siedebereich von 158°C - 172°C eingewogen. Das Lösemittel wird auf 140°C aufgeheizt. Nach Erreichen von 140°C werden eine Monomermischung aus 727 g n-Butylmethacrylat, 148 g Cyclohexylmethacrylat, 148 g Styrol, 445 g 4-Hydroxibutylacrylat und 15 g Acrylsäure innerhalb von 4 Stunden, und eine Initiatorlösung von 29 g t-Butylperethylhexanoat in 89 g des beschriebenen aromatischen Lösemittels innerhalb von 4,5 Stunden gleichmäßig in den Reaktor dosiert. Mit der Dosierung der Monomermischung und der Initiatoranlösung wird gleichzeitig begonnen. Nach Beendigung der Initiatordosierung wird die Reaktionsmischung zwei weitere Stunden auf 140°C gehalten und danach abgekühlt. Die resultierende Polymerlösung hat einen Feststoffgehalt von 62 % bestimmt in einem Umluftofen 1 h bei 130 Grad C), eine Säurezahl von 9 und eine Viskosität von 21 dPa.s (gemessen an einer 60%igen Anlösung der Polymerlösung in dem beschrieben aromatischen Lösemittel, unter Verwendung eines ICI-Platte-Kegel Viskosimeters bei 23 Grad C).

### 1.2. Acrylatharz B

In einem Labor-Reaktor mit einem Nutzvolumen von 4 1 ausgestattet mit einem Rührer, zwei Tropftrichtern für die Monomermischung resp. Initiatorlösung, StickstoffEinleitungsrohr, Thermometer und Rückflußkühler werden 897 g einer Fraktion aromatischer Kohlenwasserstoffe mit einem Siedebereich von 158 Grad C - 172 Grad C eingewogen. Das Lösemittel wird auf 140 Grad C aufgeheizt, Nach Erreichen von 140 Grad C werden eine Monomermischung aus 487 g t-Butylacrylat, 215 g n-Butylmethacrylat, 143 g Styrol, 572 g Hydroxipropylmethacrylat und 14 g Acrylsäure innerhalb von 4 Stunden, und eine Initiatorlösung von 86 g t-Butylperethylhexanoat in 86 g des beschriebenen aromatischen Lösemittels innerhalb von 4,5 Stunden gleichmäßig in den Reaktor dosiert. Mit der Dosierung der Monomermischung und der Initiatoranlösung wird gleichzeitig begonnen. Nach Beendigung der Initiatordosierung wird die Reaktionsmischung zwei weitere Stunden auf 140 Grad C gehalten und danach abgekühlt. Die resultierende Polymerlösung hat einen Feststoffgehalt von 62 % bestimmt in einem Umluftofen 1 h bei 130 Grad C), eine Säurezahl von 10 und eine Viskosität von 23 dPa.s (gemessen an einer 60%igen Anlösung der Polymerlösung in dem beschrieben aromatischen Lösemittel, unter Verwendung eines ICI Platte-Kegel Viskosimeters bei 23 Grad C).

### 1.3. Alkydharz C

In einem Labor-Reaktor mit einem Nutzvolumen von 4 1 ausgestattet mit einem Rührer, Wasserabscheider, Rückflußkühler, Stickstoff-Einleitungsrohr und Thermometer werden 1330 g Hexahydrophthalsäureanhydrid, 752 g 1, 1, 1 Trimethylolpropan, 249 g 1,4-Dimethylolcyclohexan, 204 g Hexandiol-1,6, 136 g Isononansäure (als Isomerengemisch von 3,3,5-Trimethylhexansäure und 3,5,5Trimethylhexansäure) und 75 g Xylol als Schleppmittel eingewogen. Der Wasserabscheider wird mit Xylol gefällt. Der Inhalt des Reaktors wird innerhalb von 8 Stunden auf 210 Grad C so aufgeheizt, daß ein gleichmäßiger Rückfluß des Schleppmittels entsteht. Der Reaktorinhalt wird auf 210 Grad C gehalten, bis eine Säurezahl von 17,1 und eine Viskosität von 15 dPas, gemessen an einer 60 %-igen Lösung des Reaktionsgemisches in dem in den Acrylatharzen A und B beschriebenen aromatischen Lösemittel, erreicht ist. Dann wird auf 140 Grad C abgekühlt und der Inhalt des Reaktors mit so viel des genannten aromatischen Lösemittels angelöst, daß ein nichtflüchtiger Anteil von 61 % (bestimmt in einem Umluftofen 60 min bei 130 Grad C) resultiert, Die auf diese Weise hergestellte Alkydharzlösung hat eine Säurezahl von 17,1 und eine Viskosität von 15 dPa.s (gemessen an einem ICI-Platte-Kegel-Viskosimeter bei 23 Grad C).

## 2. Herstellung der Mehrkomponenten-Klarlacke

### 2,1. Komponente (I)

Die Komponente (I) der Zweikomponenten-Klarlacke wird hergestellt, indem man die Bindemittellösung einwiegt, dann unter Rühren die in Tabelle 1 angegebenen Mengen Lösemittel, UV-Absorber, Radikalfänger und Verlaufsmittel zugibt und gut einrührt. Die Mengenangaben in dieser und den folgenden Tabellen sind als Gewichtsangaben zu verstehen.

Tabelle 1:

| | **Komp.(I)** a | **Komp.(I)** b | **Komp.(I** )c | **Komp.(I)** d | **Komp.(I)** e | **Komp.(I)** f |
|---|---|---|---|---|---|---|
| Acrylatharz A | 55,0 | | | 79,6 | | |
| Acrylatharz B | | 50,0 | | | 62,8 | |
| Alkydharz C | | | 62,0 | | | 72,0 |
| Tiniuvin 400 | 1,3 | 1,0 | | 1,3 | 1,0 | |
| Tiniuvin 123 | 1,0 | 1,5 | | 1,0 | 1,5 | |
| Tiniuvin 384 | | | 1,2 | | | 1,2 |
| Tiniuvin 292 | | | 1,0 | | | 1,0 |
| Siliconöl-Lösung | 2,5 | 2,5 | 3,0 | 2,5 | 2,5 | 3,0 |
| Butyldiglycolacetat | 4,0 | 10,0 | 9,0 | 4,0 | 10,0 | 9,0 |
| Butylglycolacetat | 4,0 | 8,0 | 5,5 | 4,0 | 8,0 | 5,5 |
| Methoxipropylacetat | 3,6 | 8,4 | | 30, | 8,0 | |
| Solventnaphta | | | 5,1 | | | 5,1 |
| Butylacetat | 15,6 | 5,8 | 3,2 | 4,6 | 5,8 | 3,2 |

### 2.2. Komponente (II)

Die Komponente (II) besteht aus einer Anlösung handelsüblicher Isocyanurat-Trimere in einem geeigneten Lösemittel. Sie wird durch Einrühren der Lösemittels in die Lieferform der Isocyanurate gemäß Tabelle 2 hergestellt

Tabelle 2:

| | Komponente (II)a | Komponente (II)b |
|---|---|---|
| Desmodur Z 4470 | 63,5 | 26,5 |
| Tolonate HDT 90 | 24,8 | |
| Basonat HI 190 B/S | | 61,8 |
| Solventnaphta | 5,85 | 5,85 |
| Butylacetat | 5,85 | 5,85 |

### 2.3 Komponente (III)

Die Komponente (III) besteht aus einer (handels-) üblichen Lösung Tris(alkoxycarbonylamino)Triazin-Vernetzer gemäß US 5084541, ggf. in einem geeigneten Lösemittel, wie Solventnaphta, Butylacetat, Basonat HI 190 B/S und/oder Tolonate HDT 90.

### 3. Herstellung der Klarlacke

Die Klarlacke werden hergestellt indem man die Komponenten (I) bis (III) gemäß der in Tabelle 3 angegebenen Mengenverhältnisse gemischt werden und sofort nach der Mischung appliziert werden. Alternativ können für die Applikation auch spezielle Mehrkomponenten- Anlagen angewandt werden, die dem Durchschnittsfachmann bekannt sind und daher hier nicht näher beschrieben werden müssen. Die Mengenangaben an Komponente (III) bezieht sich dabei auf die Menge an reinem Tris(alkoxycarbonylamino)Triazin-Vernetzer gemäß US 5084541. In der Tabelle 3 finden sich außerdem Eigenschaften der Klarlacke, die die Erfindung verdeutlicht.

Tabelle 3:

| | Klarlack 1 | Klarlack2 | Klarlack3 | Klarlack4 | Klarlack5 | Klarlack6 |
|---|---|---|---|---|---|---|
| | | | | | | |
| Komp. (I) | d: 73,9 | a: 93,5 | | | | |
| Komp. (III) | | 12,2 | | | | |
| Komp. (I) | | | e: 77,0 | b: 91,0 | | |
| Komp. (III) | | | | 11,7 | | |
| Komp. (I) | | | | | f: 76,7 | c: 86,7 |
| Komp. (III) | | | | | | 8,7 |
| Komp. (II)a | 26,1 | 6,5 | | | | |
| Komp. (II)b | | | 23,0 | 9,0 | 23,3 | 13,3 |
| | | | | | | |
| Kratzfestigkeit*3 | schlecht | gut | schlecht | gut | schlecht | gut |
| JV(Note) + 1) | 4,0 | 4,0 | 4,5 | 4,5 | 3,0 | 3,0 |
| Steinschlag +2) | schlecht | gut | schlecht | gut | schlecht | gut |

*1) Note nach 14 Wochen Freibewitterung in Jacksonville/Florida (1= keine Schädigung, 10 = Reklamationsfall)
*2) Steinschlagprüfung nach VDA 621-428 (Monoschlag)
Progress in organic coatings, vol. 22, 1993
Seite 27 - 37

### Patentansprüche

1. Komponentensystem für ein Mehrkomponenten-Beschichtungsmittel enthaltend

   (1) ein hydroxyfunktionelles Bindemittel oder eine Mischung aus hydroxyfunktionellen Bindemitteln,
   (2) Tris(alkoxycarbonylamino)Triazin oder eine Mischung aus Tris(alkoxycarbonylamino)Triazinen und
   (3) freie (Poly-) Isocyanate oder eine Mischung aus freien (Poly-) Isocyanaten,

   ***dadurch gekennzeichnet,***

   daß eine erste Komponente (I) aus dem hydroxyfunktionellen Bindemittel oder der Mischung aus hydroxyfunktionellen Bindemitteln (1) gebildet ist,

   daß eine zweite Komponente (II) aus den freien (Poly-) Isocyanaten oder der Mischung aus freien (Poly-) Isocyanaten (3) gebildet ist, und

   daß eine dritte Komponente (III) aus dem Tris(alkoxycarbonylamino)Triazin oder der Mischung aus Tris(alkoxycarbonylamino)Triazinen (2) gebildet ist.

2. Komponentensystem nach Anspruch 1, *dadurch gekennzeichnet,* daß das hydroxyfunktionelle Bindemittel oder die Mischung aus hydroxyfunktionellen Bindemitteln aus der Gruppe "Bindemittel auf Basis von hydroxyfunktionellen Polyacrylaten, hydroxyfunktionellen Polyestern und/oder hydroxyfunktionellen Polyurethanen" ausgewählt ist und/oder Mischungen aus Elementen dieser Gruppe und/oder Mischungen verschiedener Bindemittel eines Elements dieser Gruppe enthält.

**3.** Komponentensystem nach einem der Ansprüche 1 oder 2, *dadurch gekennzeichnet,* daß die Menge an Tris(alkoxycarbonylamino)Triazin oder an Mischung aus Tris(alkoxycarbonylamino)Triazinen 1 bis 99 Gew.%, vorzugsweise 5 bis 90 Gew.%, beträgt bezogen auf die Gesamtmenge an Tris(alkoxycarbonylamino)Triazin bzw. Mischung aus Tris(alkoxycarbonylamino)Triazinen plus freie Isocyanate bzw. der Mischung aus freien Polyisocyanate.

**4.** Komponentensystem nach einem der Ansprüche 1 bis 3, *dadurch gekennzeichnet,* daß die Mengen der Bestandteile (1) bis (3) in den Verhältnissen zueinander so gewählt sind, daß das Verhältnis OH: (NCO + NH-CO-OR) 1,0: 0,5 bis 1,0:2,0, vorzugsweise 1,0:0,8 bis 1,0:1,5, beträgt.

**5.** Komponentensystem nach einem der Ansprüche 1 bis 4, *dadurch gekennzeichnet,* daß es UV-Absorber, vorzugsweise Triazinverbindungen, und Radikalfänger in zumindest einer der Komponenten (I) und/oder (II) und/oder (III) enthält.

**6.** Komponentensystem nach einem der Ansprüche 1 bis 5, *dadurch gekennzeichnet,* daß es Rheologiemittel in zumindest einer der Komponenten (I) und/oder (II) und/oder (III) enthält.

**7.** Komponentensystem nach einem der Ansprüche 1 bis 6, *dadurch gekennzeichnet,* daß es metallorganische Katalysatoren, vorzugsweise Zinn- und/oder wismutorganische Verbindungen und/oder tertiäre Amine enthält.

**8.** Verfahren zur Herstellung eines Komponentensystem nach einem der Ansprüche 1 bis 7, *dadurch gekennzeichnet,* daß

- die Komponente (I) aus dem hydroxyfunktionellem Bindemittel oder der Mischung aus hydroxyfunktionellen Bindemitteln hergestellt wird,
- die Komponente (II) aus dem freiem Polyisocyanat oder der Mischung aus freien Polyisocyanaten hergestellt wird, und
- die Komponente (III) aus dem Tris(alkoxycarbonylamino)Triazin oder der Mischung aus Tris(alkoxycarbonylamino)Triazinen hergestellt wird, wobei zumindest einer der Komponenten (I) bis (III) lackübliche Zusatzstoffe zugegeben und mit dieser homogen verrührt werden.

**9.** Verfahren nach Anspruch 8, *dadurch gekennzeichnet,* daß als lackübliche Zusatzstoffe Lösemittel, UV-Absorber, Radikalfänger, Verlaufsmittel und/oder Rheologiemittel zugegeben werden.

**10.** Verfahren nach Anspruch 8 oder 9, *dadurch gekennzeichnet,* daß die lacküblichen Zusatzstoffe der Komponente (I) zugegeben werden.

**11.** Verfahren nach einem der Ansprüche 8 bis 10, *dadurch gekennzeichnet,* daß die Mengen der Bestandteile (1) bis (3) so gewählt werden, daß das Verhältnis OH: (NCO + NH-CO-OR) 1, 0:0, 5 bis 1, 0:2, 0, vorzugsweise 1, 0:0, 8 bis 1, 0:1, 5 beträgt.

**12.** Verwendung eines Komponentensystems nach einem der Ansprüche 1 bis 7 in einem Verfahren zur Beschichtung eines Substrats mittels eines Beschichtungsmittels, *dadurch gekennzeichnet,* daß die Komponenten (I) bis (III) vor der Applikation, vorzugsweise unmittelbar vor der Applikation, zu dem Beschichtungsmittel miteinander vermischt, appliziert und gemeinsam eingebrannt werden.

**13.** Verwendung eines Komponentensystems nach einem der Ansprüche 1 bis 7 in einem Verfahren zur Beschichtung eines Substrats mittels eines Beschichtungsmittels, *dadurch gekennzeichnet,* daß die Komponenten (I) bis (III) mit Hilfe einer speziellen Mehrkomponenten-Applikationseinrichtung appliziert und zusammen eingebrannt werden.

**14.** Verwendung eines Komponentensystems nach einem der Ansprüche 1 bis 7 zur Herstellung eines Decklacks oder eines Klarlacks.

## Claims

**1.** Component system for a multicomponent coating composition comprising

(1) a hydroxy-functional binder or a mixture of hydroxy-functional binders,
(2) tris(alkoxycarbonylamino)triazine or a mixture of tris(alkoxycarbonylamino)triazines and
(3) free (poly)isocyanates or a mixture of free (poly)isocyanates,

***characterized***

in that a first component (I) is formed from the hydroxy-functional binder or the mixture of hydroxy-functional binders (1),
in that a second component (II) is formed from the free (poly)isocyanates or from the mixture of free (poly)-isocyanates (3), and
in that a third component (III) is formed from the tris(alkoxycarbonylamino)triazine or from the mixture of tris (alkoxycarbonylamino)triazines (2).

**2.** Component system according to Claim 1, *characterized* in that the hydroxy-functional binder or the mixture of hydroxy-functional binders is selected from the group "binders based on hydroxy-functional polyacrylates, hydroxy-functional polyesters and/or hydroxy-functional polyurethanes" and/or comprises mixtures of members of this group and/or mixtures of different binders of a member of this group.

**3.** Component system according to one of Claims 1 or 2, *characterized* in that the amount of tris(alkoxy-carbonylamino)triazine or of the mixture of tris(alkoxycarbonylamino)triazines is from 1 to 99% by weight, preferably from 5 to 90% by weight, based on the overall amount of tris(alkoxycarbonylamino)triazine or mixture of tris(alkoxycarbonylamino)triazines plus free isocyanates or of the mixture of free polyisocyanates.

**4.** Component system according to one of Claims 1 to 3, *characterized* in that the amounts of the constituents (1) to (3) are chosen in their ratios to one another such that the ratio OH: (NCO + NH-CO-OR) is from 1.0:0.5 to 1.0:2.0, preferably from 1.0:0.8 to 1.0:1.5.

**5.** Component system according to one of Claims 1 to 4, *characterized* in that it comprises UV absorbers, preferably triazine compounds, and free-radical scavengers in at least one of components (I) and/or (II) and/or (III).

**6.** Component system according to one of Claims 1 to 5, *characterized* in that it comprises rheological agents in at least one of components (I) and/or (II) and/or (III).

**7.** Component system according to one of Claims 1 to 6, *characterized* in that it comprises organometallic catalysts, preferably organotin and/or organobismuth compounds and/or tertiary amines.

**8.** Process for preparing a component system according to one of Claims 1 to 7, *characterized* in that

- component (I) is prepared from the hydroxy-functional binder or the mixture of hydroxy-functional binders,
- component (II) is prepared from the free polyisocyanate or the mixture of free polyisocyanates, and
- component (III) is prepared from the tris(alkoxycarbonylamino)triazine or the mixture of tris(alkoxycarbonylamino)triazines,

customary coatings additives being added to at least one of components (I) to (III) and being stirred together homogeneously with the said component(s).

**9.** Process according to Claim 8, *characterized* in that customary coatings additives added are solvents, UV absorbers, free-radical scavengers, levelling agents and/or rheological agents.

**10.** Process according to Claim 8 or 9, *characterized* in that the customary coatings additives are added to component (I).

**11.** Process according to one of Claims 8 to 10, *characterized* in that the amounts of the constituents (1) to (3) are chosen so that the ratio OH: (NCO + NH-CO-OR) is from 1.0:0.5 to 1.0:2.0, preferably from 1.0:0.8 to 1.0:1.5.

**12.** Use of a component system according to one of Claims 1 to 7 in a method of coating a substrate by means of a coating composition *characterized* in that the components (I) to (III) are mixed with one another to form a coating composition prior to application, preferably directly prior to application, and are then applied and baked together.

**13.** Use of a component system according to one of Claims 1 to 7 in a method of coating a substrate by means of a coating composition *characterized* in that the components (I) to (III) are applied with the aid of a special multicomponent application device and are baked together.

**14.** Use of a component system according to one of Claims 1 to 7 for producing a topcoat or a clearcoat.

**Revendications**

**1.** Système de composants pour une composition de revêtement multicomposant comprenant

(1) un liant à fonction hydroxy ou un mélange de liants à fonction hydroxy,
(2) une tris(alcoxycarbonylamino)triazine ou un mélange de tris(alcoxycarbonylamino)triazines et
(3) des (poly)isocyanates libres ou un mélange de (poly)isocyanates libres,

***caractérisé***

en ce qu'un premier composant (I) est formé à partir du liant à fonction hydroxy ou du mélange de liants à fonction hydroxy (1),
en ce qu'un deuxième composant (II) est formé à partir des (poly)isocyanates libres ou du mélange de (poly) isocyanates libres (3), et
en ce qu'un troisième composant (III) est formé à partir de la tris(alcoxycarbonylamino)triazine ou du mélange de tris(alcoxycarbonylamino)triazines (2).

**2.** Système de composants selon la revendication 1, *caractérisé* en ce que le liant à fonction hydroxy ou le mélange de liants à fonction hydroxy est choisi parmi le groupe constitué de « liants à base de polyacrylates à fonction hydroxy, de polyesters à fonction hydroxy et/ou de polyuréthanes à fonction hydroxy » et/ou comprend des mélanges d'éléments de ce groupe et/ou des mélanges de différents liants d'un élément de ce groupe.

**3.** Système de composants selon l'une quelconque des revendications 1 ou 2, *caractérisé* en ce que la quantité de tris(alcoxycarbonylamino)triazine ou de mélange de tris(alcoxycarbonylamino)triazines est de 1 à 99% en poids, de préférence de 5 à 90% en poids, par rapport à la quantité totale de tris(alcoxycarbonylamino)triazine ou de mélange de tris(alcoxycarbonylamino)triazines et d'isocyanates libres ou du mélange de polyisocyanates libres.

**4.** Système de composants selon l'une quelconque des revendications 1 à 3, *caractérisé* en ce que les quantités des constituants (1) à (3) sont choisies, dans leurs rapports les unes par rapport aux autres, de telle sorte que le rapport OH: (NCO+NH-CO-OR) soit de 1,0:0,5 à 1,0:2,0, de préférence de 1,0:0,8 à 1,0:1,5.

**5.** Système de composants selon l'une quelconque des revendications 1 à 4, *caractérisé* en ce qu'il comprend des agents absorbant les UV, de préférence des composés triaziniques, et des capteurs de radicaux dans au moins l'un des composants (I) et/ou (II) et/ou (III).

**6.** Système de composants selon l'une quelconque des revendications 1 à 5, *caractérisé* en ce qu'il comprend des agents rhéologiques dans au moins l'un des composants (I) et/ou (II) et/ou (III).

**7.** Système de composants selon l'une quelconque des revendications 1 à 6, *caractérisé* en ce qu'il comprend des catalyseurs organométalliques, de préférence des composés organo-étain et/ou organobismuth et/ou des amines tertiaires.

**8.** Procédé de préparation d'un système de composants selon l'une quelconque des revendications 1 à 7, *caractérisé* en ce que

- le composant (I) est préparé à partir du liant à fonction hydroxy ou du mélange de liants à fonction hydroxy,
- le composant (II) est préparé à partir du polyisocyanate libre ou du mélange de polyisocyanates libres, et

- le composant (III) est préparé à partir de la tris(alcoxycarbonylamino)triazine ou du mélange de tris(alcoxycarbonylamino)triazines,

des additifs habituels pour les revêtements étant ajoutés à au moins l'un des composants (I) à (III) et étant mélangés de manière homogène avec ceux-ci en agitant.

**9.** Procédé selon la revendication 8, *caractérisé* en ce que l'on ajoute, en tant qu'additifs habituels pour les revêtements des solvants, des agents absorbant les UV, des capteurs de radicaux, des agents d'égalisation et/ou des agents rhéologiques.

**10.** Procédé selon la revendication 8 ou 9, *caractérisé* en ce que les additifs habituels pour les revêtements sont ajoutés au composant (I).

**11.** Procédé selon l'une quelconque des revendications 8 à 10, *caractérisé* en ce que les quantités des constituants (1) à (3) sont choisies de telle sorte que le rapport OH: (NCO+NH-CO-OR) soit de 1,0:0,5 à 1,0:2,0, de préférence de 1,0:0,8 à 1,0:1,5.

**12.** Utilisation d'un système de composants selon l'une quelconque des revendications 1 à 7 dans un procédé de revêtement d'un substrat au moyen d'une composition de revêtement, *caractérisée* en ce que les composants (I) à (III) sont mélangés les uns avec les autres pour former la composition de revêtement avant l'application, de préférence immédiatement avant l'application, et sont appliqués et cuits conjointement.

**13.** Utilisation d'un système de composants selon l'une quelconque des revendications 1 à 7 dans un procédé de revêtement d'un substrat au moyen d'une composition de revêtement, *caractérisée* en ce que les composants (I) à (III) sont appliqués à l'aide d'un dispositif d'application multicomposant spécifique et cuits conjointement.

**14.** Utilisation d'un système de composants selon l'une quelconque des revendications 1 à 7 pour la production d'une couche de finition ou d'une couche transparente.